# EUROPÄISCHE PATENTSCHRIFT

(11) **EP 1 261 844 B1**
(45) Veröffentlichungstag und Bekanntmachung des Hinweises auf die Patenterteilung: **07.07.2004**
(21) Anmeldenummer: 01917009.1
(22) Anmeldetag: 20.02.2001
(51) Int. Cl.: G01D 5/20, H01F 7/20

(54) **ANORDNUNG ZUR ERZEUGUNG ELEKTRISCHER ENERGIE AUS EINEM MAGNETFELD**
SYSTEM FOR GENERATING ELECTRIC ENERGY FROM A MAGNETIC FIELD
SYSTEME POUR PRODUIRE DE L'ENERGIE ELECTRIQUE A PARTIR D'UN CHAMP MAGNETIQUE

(30) Priorität: 09.03.2000 DE 10011501; 09.11.2000 DE 10055404
(43) Veröffentlichungstag der Anmeldung: 04.12.2002
(73) Patentinhaber: ABB Research Ltd., 8050 Zürich (CH)
(72) Erfinder: SCHEIBLE, Guntram, 69493 Hirschberg (DE); GARRELS, Kai, 68239 Mannheim (DE)
(74) Vertreter: Miller, Toivo
(86) Internationale Anmeldenummer: PCT/EP2001/001866
(87) Internationale Veröffentlichungsnummer: WO 2001/067046

(56) Entgegenhaltungen:
- DE-A- 3 922 556
- DE-A- 19 720 465
- GB-A- 1 595 108
- US-A- 4 788 987
- US-A- 5 047 715

## Beschreibung

Die Erfindung bezieht sich auf eine Anordnung zur Erzeugung elektrischer Energie aus einem Magnetfeld. Die Erfindung kann beispielsweise zur Energieeinspeisung von Sensoren verwendet werden.

Aus der DE 39 22 556 C3 ist eine Anordnung zur kontaktlosen Energie- und Sensorsignalübertragung mit einem HF-Sender zum Aufbau eines unmodulierten magnetischen Hochfrequenzfeldes über eine Sendespule bekannt, bei der ein Transponder das hochfrequente Magnetfeld aufnimmt und zu seiner Energieversorgung heranzieht. Mit der aus dem magnetischen Feld gewonnenen Versorgungsenergie werden Sensor und Transponder versorgt.

Der Erfindung liegt die Aufgabe zugrunde, eine sehr wirksame Anordnung zur Erzeugung elektrischer Energie aus einem Magnetfeld anzugeben.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß die dreidimensionale Wicklungsanordnung keine spezielle Ausrichtung in Abhängigkeit eines zur Energiespeisung herangezogenen Magnetfeldes erfordert. Die dreidimensionale Wicklungsanordnung ist vielmehr stets in allen möglichen Positionen "automatisch" optimal bezüglich des Magnetfeldes ausgerichtet, was einen optimalen Empfang und eine optimale energetische Ausnutzung ermöglicht.

US-A-4 788 987 beschreibt einen Positionsdetektor, bei dem eine oder mehrere Anordnungen mit drei senkrecht zueinander angeordneten Wicklungen auf einem kugelförmigen Kern aus magnetisch wirksamen Material elektrische Energie aus drei Erregermagnetfeldern unterschiedlicher Frequenz bilden. Aus den drei entstehenden Wechselspannungen unterschiedlicher Frequenz wird die Position der Anordnung relativ zu den Erregerfeldern berechnet.

Die vorgeschlagene dreidimensionale Wicklungsanordnung ist insbesondere geeignet für eine in der DE 199 26 799 A1 vorgeschlagene Anordnung zur drahtlosen Versorgung einer Vielzahl Sensoren mit elektrischer Energie unter Einsatz mindestens einer von einem mittelfrequenten Oszillator gespeisten Primärwicklung (Primärspule, Sendespule), wobei jeder Sensor mindestens eine zur Energieaufnahme aus einem mittelfrequenten Magnetfeld (Bereich von etwa 15 kHz bis etwa 15 MHz) geeignete Sekundärwicklung (Sekundärspule, Empfangsspule) aufweist. Die dort erforderlichen Sekundärwicklungen können sehr gut durch die vorgeschlagene dreidimensionale Wicklungsanordnung realisiert werden. Der Vorteil der stets "automatisch" optimalen Ausrichtung bezüglich des Magnetfeldes ist insbesondere bei an beweglichen Maschinenkomponenten montierten Sensoren (Näherungssensoren) bedeutsam.

Weitere Vorteile sind aus der nachstehenden Beschreibung ersichtlich.

Vorteilhafte Ausgestaltungen der Erfindung sind in den abhängigens Ansprüchen gekennzeichnet.

Die Erfindung wird nachstehend anhand der in der Zeichnung dargestellten Ausführungsbeispiele erläutert. Es zeigen:
- Fig.1: eine erste Ausführungsform einer dreidimensionalen Wicklungsanordnung,
- Fig. 2: eine zweite Ausführungsform einer dreidimensionalen Wicklungsanordnung,
- Fig. 3: eine dritte Ausführungsform einer dreidimensionalen Wicklungsanordnung,
- Fig. 4: eine erste Ausführungsform einer Anordnung zur Erzeugung elektrischer Energie aus einem Magnetfeld,
- Fig. 5: eine zweite Ausführungsform einer Anordnung zur Erzeugung elektrischer Energie aus einem Magnetfeld,
- Fig. 6: eine dritte Ausführungsform einer Anordnung zur Erzeugung elektrischer Energie aus einem Magnetfeld,
- Fig. 7: eine vierte Ausführungsform einer Anordnung zur Erzeugung elektrischer Energie aus einem Magnetfeld,
- Fig. 8: eine fünfte Ausführungsform einer Anordnung zur Erzeugung elektrischer Energie aus einem Magnetfeld.

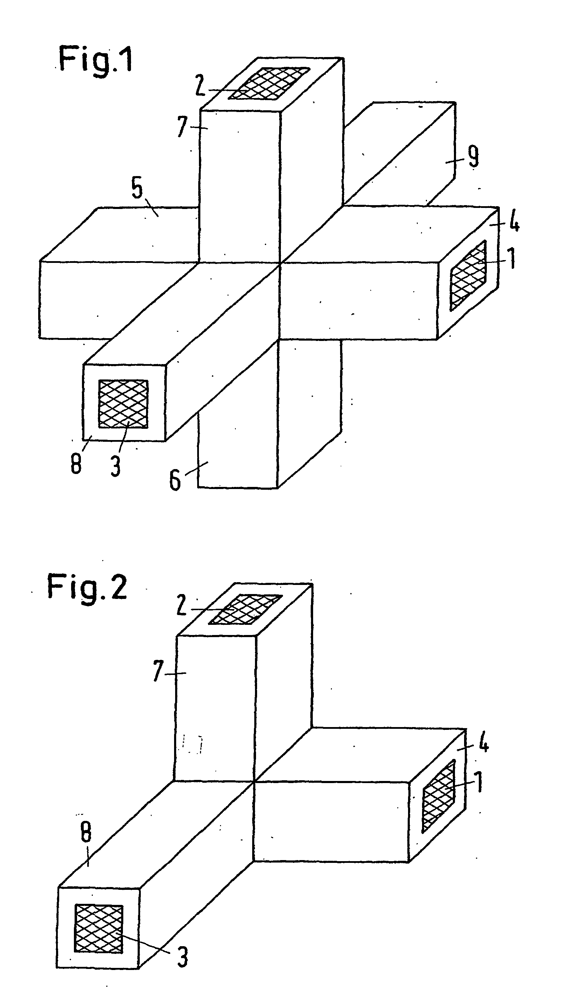

In Fig. 1 ist eine erste Ausführungsform einer dreidimensionalen Wicklungsanordnung dargestellt. Es ist ein symmetrisch aufgebauter Kern aus drei zueinander jeweils rechtwinklig angeordneten Schenkeln 1, 2, 3 zu erkennen, wobei sich die Längsachsen der drei Schenkel 1, 2, 3 in einem zentralen Punkt des Kerns schneiden und auf jedem Schenkel 1 bzw. 2 bzw. 3 zwei Wicklungen 4, 5 bzw. 6, 7 bzw. 8, 9 symmetrisch zum zentralen Schnittpunkt aufgebracht sind. Demzufolge sind die Wicklungsachsen der Wicklungen 4 bis 9 jeweils rechtwinklig zueinander angeordnet und schneiden sich in einem Punkt, der gleichzeitig zentraler Punkt des Kerns ist. Der Kein ist aus einem magnetisch wirksamen Material gebildet.

In Fig. 2 ist eine zweite Ausführungsform einer dreidimensionalen Wicklungsanordnung dargestellt. Es ist ein unsymmetrisch aufgebauter Kern aus drei zueinander jeweils rechtwinklig angeordneten Schenkeln 1, 2, 3 zu erkennen, wobei sich die Längsachsen der drei Schenkel 1, 2, 3 in einem randseitigen Punkt des Kerns schneiden und auf jedem Schenkel 1 bzw. 2 bzw. 3 eine Wicklung 4 bzw. 7 bzw. 8 aufgebracht ist. Die Wicklungsachsen der Wicklungen 4, 7, 8 sind jeweils rechtwinklig zueinander angeordnet und schneiden sich in einem Punkt, der gleichzeitig der vorstehend erwähnte randseitige Punkt des Kerns ist.

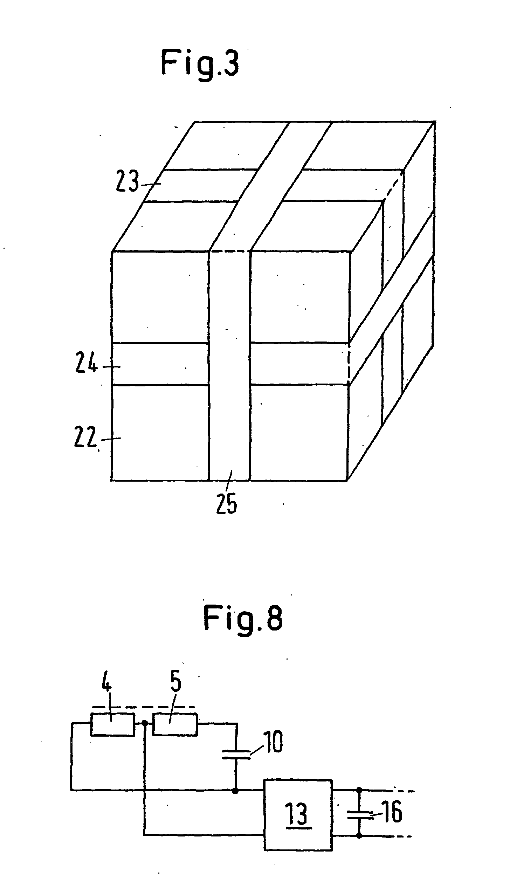

In Fig. 3 ist eine dritte Ausführungsform einer dreidimensionalen Wicklungsanordnung dargestellt. Es ist ein kubusförmiger Kern 22 zu erkennen, auf den drei Wicklungen 23, 24, 25 aufgebracht sind. Die Wicklungsachsen der Wicklungen 23 bis 25 sind jeweils rechtwinklig zueinander angeordnet und schneiden sich in einem zentralen Punkt des Kerns 22. Der Vorteil dieser Ausführungsform liegt in der einfachen und kostengünstigen Herstellbarkeit. Zur Aufnahme der Wicklungen 23 bis 25 kann der Kern 22 mit entsprechenden Nuten versehen sein, es ist jedoch auch möglich, die Wicklungen 23 bis 25 direkt auf den Kern 22 aufzubringen.

Selbstverständlich ist auch eine kugelförmige Ausbildung des Kerns realisierbar.

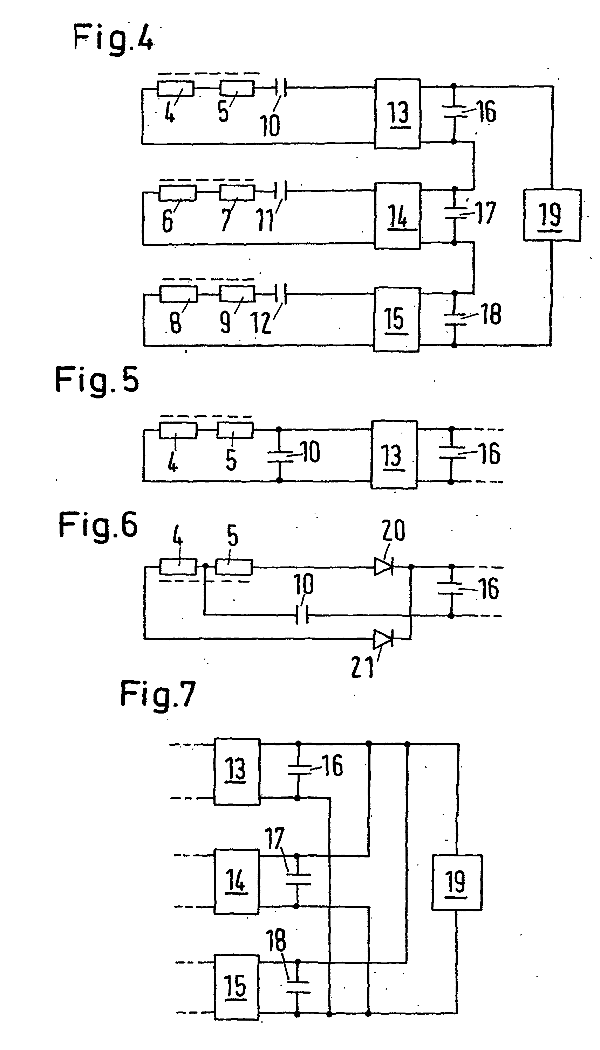

In Fig. 4 ist eine erste Ausführungsform einer Anordnung zur Erzeugung elektrischer Energie aus einem Magnetfeld dargestellt. Dabei wird beispielhaft eine Ausführungsform der dreidimensionalen Wicklungsanordnung gemäß Fig. 1 angenommen, eine Realisierung der weiteren Ausführungsformen der Wicklungsanordnungen gemäß den Fig. 2 und 3 ist jedoch ebenfalls möglich. Es ist ein Gleichrichter 13 zu erkennen, dessen Wechselanschlüsse mit einer Serienschaltung der beiden Wicklungen 4, 5 mit einem Resonanzkondensator 10 verbunden sind (Serien-Resonanzkreise). ln gleicher Weise liegt an den Wechselanschlüssen eines Gleichrichters 14 die Serienschaltung der beiden Wicklungen 6, 7 mit einem Resonanzkondensator 11 bzw. an den Wechselanschlüssen eines Gleichrichters 15 die Serienschaltung der beiden Wicklungen 8, 9 mit einem Resonanzkondensator 12. Die Gleichrichter 13, 14, 15 sind jeweils in Brükkenschaltung unter Verwendung von vier Halbleiter-Bauelementen gebildet (BrückenGleichrichter). Zwischen den Gleichanschlüssen eines jeden Gleichrichters 13 bzw. 14 bzw. 15 ist ein Stützkondensator 16 bzw. 17 bzw. 18 angeordnet. Die Gleichanschlüsse aller Gleichrichter sind in Serie mit einer Last 19 (Sensor-Meßeinheit und SensorElektronik) verschaltet.

ln Fig. 5 ist eine zweite Ausführungsform einer Anordnung zur Erzeugung elektrischer Energie aus einem Magnetfeld dargestellt. Dabei ist der Resonanzkondensator 10 parallel zur Serienschaltung der Wicklungen 4, 5 zwischen den Wechselanschlüssen des Gleichrichters 13 angeordnet. Die weiteren Resonanzkondensatoren 11 bzw. 12 sind in gleicher Weise mit den Wicklungen 6,7 bzw. 8, 9 zu Parallel-Resonanzkreisen verschaltet.

In Fig. 6 ist eine dritte Ausführungsform einer Anordnung zur Erzeugung elektrischer Energie aus einem Magnetfeld dargestellt. Diese Ausführungsform ist speziell bei der Ausführungsform einer dreidimensionale Wicklungsanordnung nach Fig. 1 mit zwei Wicklungen pro Schenkel des Kerns einsetzbar und führt zu einer Vereinfachung des Gleichrichters. Der Gleichrichter ist hierbei in Form einer Mittelpunktschaltung (centre tapped, centre-tap connection) unter Einsatz von zwei Dioden 20, 21 ausgebildet.

In Fig. 7 ist eine vierte Ausführungsform einer Anordnung zur Erzeugung elektrischer Energie aus einem Magnetfeld dargestellt. Dabei ist gezeigt, daß die elektrische Verbindung zwischen der Last 19 und den drei Gleichrichtern 13, 14, 15 auch in Form einer Parallelschaltung der Gleichanschlüsse der Gleichrichter erfolgen kann. Selbstverständlich ist sowohl die Serienschaltung der Gleichanschlüsse der Gleichrichter als auch die Parallelschaltung der Gleichanschlüsse der Gleichrichter auch bei der Mittelpunktschaltung nach Fig. 6 realisierbar.

In Fig.8 ist eine fünfte Ausführungsform einer Anordnung zur Erzeugung elektrischer Energie aus einem Magnetfeld dargestellt. Dabei ist gezeigt, daß auch die Anzapfung zwischen den Wicklungen 4, 5 zum Betrieb als Transformator benutzt werden kann, um die Ausgangsspannung auf eine ausreichendes Niveau zu bringen. Dabei kann auch der Resonanzkondensator 10 an der Anzapfung und der Gleichrichter 13 am Endanschluß liegen. Des weiteren ist es auch möglich, zwei galvanisch getrennte Wicklungen (wie bei einem üblichen Transformator) zu verwenden.

## Patentansprüche

1. Anordnung zur Erzeugung elektrischer Energie aus einem Magnetfeld, mit einer dreidimensionalen Wicklungsanordnung, gebildet aus einem zentralen Kern (1, 2, 3, 22) aus einem magnetisch wirksamen Material, auf welchem mindestens drei Wicklungen (4 bis 9, 23 bis 25) aufgebracht sind, deren Wicklungsachsen jeweils rechtwinklig zueinander angeordnet sind und sich in einem gemeinsamen Punkt schneiden, **dadurch gekennzeichnet,**
- **daß** jede der mindestens drei Wicklungen (4 bis 9, 23 bis 25) mit einem Gleichrichter (13, 14, 15, 20/21) verbunden ist und
- **daß** jede der mindestens drei Wicklungen (4 bis 9, 23 bis 25) mit einem Resonanzkondensator (10,11,12) zu einem Resonanzkreis verschaltet ist.

2. Anordnung nach Anspruch 1, **gekennzeichnet durch** einen Serien-Resonanzkreis.

3. Anordnung nach Anspruch 1, **gekennzeichnet durch** einen Parallel-Resonanzkreis.

4. Anordnung nach einem der Ansprüche 1 bis 3, **dadurch gekennzeichnet, daß** die Gleichanschlüsse der Gleichrichter (13, 14, 15, 20/21) in Serie geschaltet sind.

5. Anordnung nach einem der Ansprüche 1 bis 3, **dadurch gekennzeichnet, daß** die Gleichanschlüsse der Gleichrichter (13,14,15, 20/21) parallel geschaltet sind.

6. Anordnung nach einem der Ansprüche 1 bis 3, **dadurch gekennzeichnet, daß** die Wicklungen transformatorisch benutzt werden.

7. Anordnung nach Anspruch 1, **gekennzeichnet durch** einen kubusförmigen Kern (22).

8. Anordnung nach Anspruch 1, **gekennzeichnet durch** einen kugelförmigen Kern.

9. Anordnung nach Anspruch 7 oder 8, **dadurch gekennzeichnet, daß** der kubusförmige Kein (22) oder der kugelförmige Kern Nuten zur Aufnahme der Wicklungen (23 bis 25) aufweisen.

10. Anordnung nach Anspruch 1, **dadurch gekennzeichnet, daß** der Kern aus drei zueinander jeweils-rechtwinklig angeordneten Schenkeln (1 bis 3) gebildet ist, wobei auf jedem Schenkel mindestens eine Wicklung (4, 7, 8) aufgebracht ist.

11. Anordnung nach Anspruch 10, **dadurch gekennzeichnet, daß** sich die Längsachsen der drei Schenkel (1 bis 3) in einem zentralen Punkt des Kerns schneiden und auf jedem Schenkel zwei Wicklungen (4 bis 9) symmetrisch zum zentralen Schnittpunkt aufgebracht sind.

## Claims

1. An arrangement for producing electric power from a magnetic field, comprising a three-dimensional winding arrangement formed from a central core (1, 2, 3, 22) which is made of a magnetically effective material and on which at least three windings (4 to 9, 23 to 25) are applied whose winding axes are each arranged in a rectangular way with respect to each other and intersect in a common point,
**characterized in**
- **that** each of the at least three windings (4 to 9, 23 to 25) is connected with a rectifier (13, 14, 15, 20/21) and
- **that** each of the at least three windings (4 to 9, 23 to 25) is switched with a resonant capacitor (10, 11, 12) into a resonant circuit.

2. An arrangement as claimed in claim 1, **characterized by** a series resonant circuit.

3. An arrangement as claimed in claim 1, **characterized by** a parallel resonant circuit.

4. An arrangement as claimed in one of the claims 1 to 3, **characterized in that** the rectifier connections of the rectifier (13, 14, 15, 20/21) are connected in series.

5. An arrangement as claimed in one of the claims 1 to 3, **characterized in that** the rectifier connections of the rectifier (13, 14, 15, 20/21) are connected in parallel.

6. An arrangement as claimed in one of the claims 1 to 3, **characterized in that** the windings are used in a transformational manner.

7. An arrangement as claimed in claim 1, **characterized by** a cube-shaped core (22).

8. An arrangement as claimed in claim 1, **characterized by** a spherical core (22).

9. An arrangement as claimed in claim 7 or 8, **characterized in that** the cube-shaped core (22) or the spherical core comprise grooves for receiving the windings (23 to 25).

10. An arrangement as claimed in claim 1, **characterized in that** the core is formed by three legs (1 to 3) which are arranged in a mutually rectangular way with respect to each other, with at least one winding (4, 7, 8) being applies to each leg.

11. An arrangement as claimed in claim 10, **characterized in that** the longitudinal axes of the three legs (1 to 3) intersect in a central point of the core and two windings (4 to 9) are applied on each leg in a symmetrical way relative to the central point of intersection.

## Revendications

1. Système pour produire de l'énergie électrique à partir d'un champ magnétique, comprenant un dispositif d'enroulement tridimensionnel constitué d'un noyau central (1, 2, 3, 22) fait d'un matériau à effet magnétique et sur lequel sont réalisés des enroulements au nombre de trois au moins (4 à 9, 23 à 25) dont les axes sont orthogonaux entre eux et se coupent en un point commun, **caractérisé en ce que**
- chacun des enroulements au nombre de trois au moins (4à 9, 23 à 25) est relié à un redresseur ( 13, 14, 15, 20/21 )
- chacun des enroulements au nombre de trois au moins (4 à 9, 23 à 25) est connecté à un condensateur de résonance (10, 11, 12) pour donner un circuit résonant.

2. Système selon la revendication 1, **caractérisé par** un circuit résonant en série.

3. Système selon la revendication 1, **caractérisé par** un circuit résonant en parallèle.

4. Système selon une des revendications 1 à 3, **caractérisé en ce que** les bornes à tension continue des redresseurs (13, 14, 15, 20/21) sont reliées en série.

5. Système selon une des revendications 1 à 3, **caractérisé en ce que** les bornes à tension continue des redresseurs (13, 14, 15, 20/21) sont reliées en parallèle.

6. Système selon une des revendications 1 à 3, **caractérisé en ce que** les enroulements sont utilisés en transformateur.

7. Système selon la revendication 1, **caractérisé par** un noyau (22) en forme de cube.

8. Système selon la revendication 1, **caractérisé par** un noyau (22) en forme de sphère.

9. Système selon la revendication 7 ou 8, **caractérisé en ce que** le noyau (22) en forme de cube ou de sphère présente des rainures pour loger les enroulements (23 à 25).

10. Système selon la revendication 1, **caractérisé en ce que** le noyau (22) est constitué par trois branches (1 à 3) orthogonales entre elles, au moins un enroulement (4, 7, 8) étant disposé sur chaque branche.

11. Système selon la revendication 10, **caractérisé en ce que** les axes longitudinaux des trois branches (1 à 3) se coupent en un point central du noyau, chaque branche portant deux enroulements (4 à 9) symétriques par rapport au point central du noyau.
